# EUROPEAN PATENT APPLICATION

(11) **EP 4 163 794 A1**
(43) Date of publication of application: **12.04.2023**
(21) Application number: 22205108.8
(22) Date of filing: 02.11.2022
(51) Int. Cl.: G06F 11/22

(54) **METHOD AND APPARATUS FOR TESTING NETWORK DEVICE**

(30) Priority: 02.11.2021 CN 202111292152
(71) Applicant: Beijing Baidu Netcom Science Technology Co., Ltd., Beijing 100085 (CN)
(72) Inventor: PENG, Jianzhang, Haidian District, Beijing, 100085 (CN)
(74) Representative: advotec.

(57) **Abstract**

The disclosure provides a method for testing a network device and an electronic device. The method includes: simulating at least one virtual client, and generating by the virtual client a second request message to be sent based on an existing first request message; sending the second request message to the network device, so that the network device sends the second request message to a simulated virtual server for processing; and receiving a response message for the second request message sent by the network device, in which the response message is sent by the virtual server to the network device.

## Description

### TECHNICAL FIELD

The disclosure relates to the technical field of data processing, and in particular to the technical field of cloud computing.

### BACKGROUND

In the related art, when testing a network device, the requirements for the test environment are relatively high, and multiple servers and a large amount of physical resources are used to increase the pressure, thus the implementation cost is high and the test efficiency is low. Therefore, how to reduce the costs for testing network devices and improve the test efficiency has become an important research direction.

### SUMMARY

The disclosure provides a method for testing a network device and an apparatus for testing a network device.

According to a first aspect of the disclosure, a method for testing a network device is provided. The method includes:
simulating at least one virtual client, and generating by the virtual client a second request message to be sent based on an existing first request message;
sending the second request message to the network device, so that the network device sends the second request message to a simulated virtual server for processing; and
receiving a response message for the second request message sent by the network device, in which the response message is sent by the virtual server to the network device.

According to a second aspect of the disclosure, a method for testing a network device is provided. The method includes:
simulating at least one virtual server;
receiving a second request message sent by the network device, in which the second request message is generated by a simulated virtual client based on an existing first request message and sent to the network device; and
generating a response message for the second request message, and sending the response message to the network device.

The disclosure avoids waste of resources, reduces the costs for testing network devices, and simplifies the testing process, so that the efficiency is accelerated, and the flexibility of testing the network devices is improved.

According to a third aspect of the disclosure, an apparatus for testing a network device is provided. The apparatus includes: a simulating module, a sending module and a receiving module.

The simulating module is configured to simulate at least one virtual client, and generate by the virtual client a second request message to be sent based on an existing first request message.

The sending module is configured to send the second request message to the network device, so that the network device sends the second request message to a simulated virtual server for processing.

The receiving module is configured to receive a response message for the second request message sent by the network device, in which the response message is sent by the virtual server to the network device.

According to a fourth aspect of the disclosure, an apparatus for testing a network device is provided. The apparatus includes: a simulating module, a sending module and a receiving module.

The simulating module is configured to simulate at least one virtual server.

The receiving module is configured to receive a second request message sent by the network device, in which the second request message is generated by a simulated virtual client based on an existing first request message and sent to the network device.

The sending module is configured to generate a response message for the second request message, and send the response message to the network device.

According to a fifth aspect, an electronic device is provided. The electronic device includes: at least one processor and a memory communicatively coupled to the at least one processor. The memory stores instructions executable by the at least one processor, and when the instructions are executed by the at least one processor, the at least one processor is enabled to implement the method according to the first aspect of the disclosure.

According to a sixth aspect, an electronic device is provided. The electronic device includes: at least one processor and a memory communicatively coupled to the at least one processor. The memory stores instructions executable by the at least one processor, and when the instructions are executed by the at least one processor, the at least one processor is enabled to implement the method according to the second aspect of the disclosure.

According to a seventh aspect of the disclosure, a non-transitory computer-readable storage medium storing computer instructions is provided. The computer instructions are configured to cause a computer to implement the method according to the first aspect of the disclosure.

According to an eighth aspect of the disclosure, a non-transitory computer-readable storage medium storing computer instructions is provided. The computer instructions are configured to cause a computer to implement the method according to the second aspect of the disclosure.

According to a ninth aspect of the disclosure, a computer program product including computer programs is provided. When the computer programs are executed by a processor, the method according to the first aspect of the disclosure is implemented.

According to a tenth aspect of the disclosure, a computer program product including computer programs is provided. When the computer programs are executed by a processor, the method according to the second aspect of the disclosure is implemented.

It should be understood that the content described in this section is not intended to identify key or important features of the embodiments of the disclosure, nor is it intended to limit the scope of the disclosure. Additional features of the disclosure will be easily understood based on the following description.

### BRIEF DESCRIPTION OF THE DRAWINGS

The drawings are used to better understand the solution and do not constitute a limitation to the disclosure, in which:
FIG. 1 is a flowchart of a method for testing a network device according to an embodiment of the disclosure.
FIG. 2 is a flowchart of a method for testing a network device according to an embodiment of the disclosure.
FIG. 3 is a schematic diagram of a method for testing a network device according to an embodiment of the disclosure.
FIG. 4 is a flowchart of a method for testing a network device according to an embodiment of the disclosure.
FIG. 5 is a schematic diagram of a method for testing a network device according to an embodiment of the disclosure.
FIG. 6 is a flowchart of a method for testing a network device according to an embodiment of the disclosure.
FIG. 7 is a schematic diagram of a method for testing a network device according to an embodiment of the disclosure.
FIG. 8 is a flowchart of a method for testing a network device according to an embodiment of the disclosure.
FIG. 9 is a flowchart of a method for testing a network device according to an embodiment of the disclosure.
FIG. 10 is a flowchart of a method for testing a network device according to an embodiment of the disclosure.
FIG. 11 is a block diagram of an electronic device used to implement a method for testing a network device according to an embodiment of the disclosure.
FIG. 12 is a block diagram of an electronic device used to implement a method for testing a network device according to an embodiment of the disclosure.

### DETAILED DESCRIPTION

The following describes the exemplary embodiments of the disclosure with reference to the accompanying drawings, which includes various details of the embodiments of the disclosure to facilitate understanding, which shall be considered merely exemplary. For clarity and conciseness, descriptions of well-known functions and structures are omitted in the following description.

The following briefly describes the technical field involved in the solution of the disclosure.

For data processing, data is an expression of facts, concepts or instructions that can be processed by manual or automatic devices. Data becomes information after being interpreted and given meaning. Data processing refers to data collection, storage, retrieval, processing, transformation and transmission. The basic purpose of data processing is to extract and deduct valuable and meaningful data for specific people from a large amount of data that may be disorganized and difficult to understand. Data processing is the basic link of system engineering and automatic control. Data processing runs through all fields of social production and social life. The development of data processing technology and the breadth and depth of its application have greatly influenced the development of human society.

Cloud computing is a type of distributed computing, which refers to decomposing a huge data computing processing program into countless small programs through the network "cloud", and then processing these small programs through a system composed of multiple servers, to generate a result and return it to the user. The early cloud computing is a simple distributed computing, which solves task distribution and merges calculation results, thus cloud computing is also called grid computing. Through this technology, the processing of tens of thousands of data can be completed in a very short period of time (several seconds), thereby achieving powerful network services.

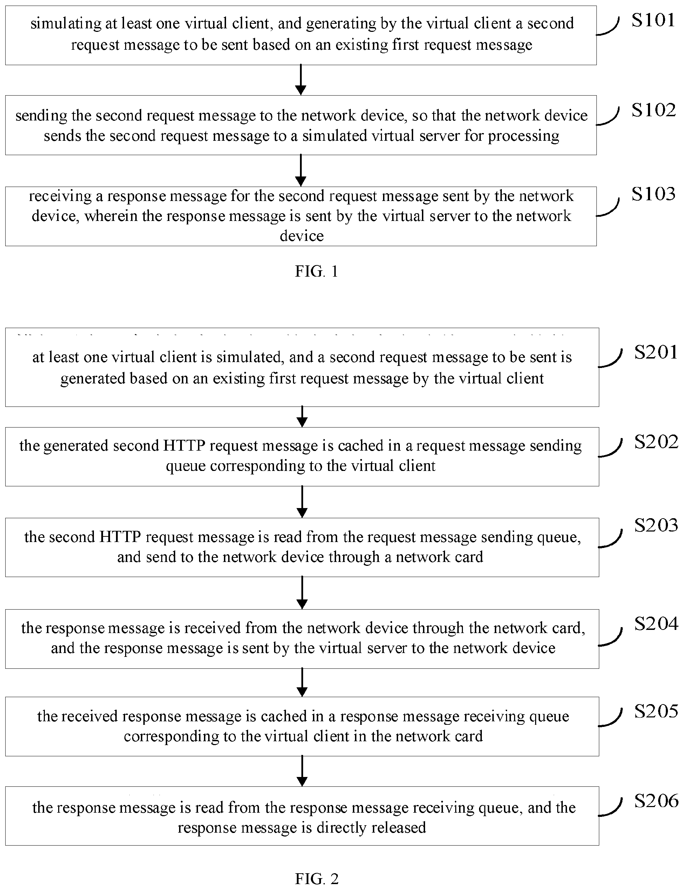

FIG. 1 is a flowchart of a method for testing a network device according to an embodiment of the disclosure. As illustrated in FIG. 1, the method further includes the following steps.

At block S101, at least one virtual client is simulated, and a second request message to be sent is generated by the virtual client based on an existing first request message.

The server simulates at least one virtual client. The virtual client refers to a simulated client that reads and writes data to the network device. There may be multiple virtual clients that are distinguished by corresponding identifiers of the virtual clients.

In the embodiment of the disclosure, in order to realize the test of the network device, firstly, the virtual client is triggered to send a request message based on a network test protocol, that is, a connection request to be sent to the network device is obtained, thereby realizing information exchange between the virtual client and the network device.

The purpose of the embodiments of the disclosure is to perform performance testing on the network device, thus there is no need to limit the specific contents of the message. In order to simplify the testing process of network device, improve efficiency, and improve the flexibility of testing network device, in some embodiments, the first request message is preset in the virtual client, and the existing first request message is reconstructed or replaced with part of the contents to generate the second request message to be sent. In the disclosure, the second request message to be sent is generated based on the existing first request message, which improves the generation speed of the request message and speeds up the test efficiency.

At block S102, the second request message is sent to the network device, so that the network device sends the second request message to a simulated virtual server for processing.

The second request message is sent to the network device, and then the network device sends the second request message to the simulated virtual server for processing.

The virtual server responds to the second request message, and generates the response message for the second request message. The response message carries address information of the virtual server.

At block S103, a response message for the second request message sent by the network device is received, in which the response message is sent by the virtual server to the network device.

The virtual server sends the generated response message for the second request message to the network device, and the network device sends the response message to the server.

Optionally, the server may confirm the connection status between the virtual client and the network device according to the address information in the response message, and then verify the response message.

Optionally, in the disclosure, the first request message and the second request message are messages capable of adopting Hyper Text Transfer Protocol (HTTP), i.e., the first HTTP request message and the second HTTP request message. In some implementations, the first request message and the second request message may be messages adopting User Datagram Protocol (UDP), i.e., the first UDP request message and the second UDP request message. In other implementations, the first request message and the second request message may be messages adopting Transmission Control Protocol (TCP), i.e., the first TCP request message and the second TCP request message. The format of the messages is not limited in the disclosure.

It should be noted that, in the disclosure, the network device mainly realizes forwarding of interaction messages between the virtual client and the virtual server, that is, the relevant introduction in step S102 and step S103. The performance of the network device is detected according to the forwarding of the interaction messages between the virtual client and the virtual server.

In the embodiments of the disclosure, the at least one virtual client is simulated, and the virtual client generates the second request message to be sent based on the existing first request message, and sends the second request message to the network device. The response message for the second request message sent by the network device is received. The disclosure avoids waste of resources, reduces the costs for testing network devices, and simplifies the testing process, so that the efficiency is accelerated, and the flexibility of testing the network devices is improved.

In some implementations, the first request message is preset in the virtual client, and then the existing first request message is reconstructed to generate the second request message to be sent. In order to simplify the testing process of network devices, improve efficiency, and improve the flexibility of testing network devices, in some implementations, the first request message is stored in the request message buffer pool, and the virtual client reads the first request message from the request message buffer pool. The header of the first request message is modified to generate the second request message to be sent. For example, the address information of the virtual client and the port of the simulated virtual server can be used as the modified header of the second request message.

In some implementations, in order to simplify the operation and avoid wasting resources, the second request message may be recalled as the first request message, and re-cached in the request message buffer pool for repeated use.

The following takes the first request message and the second request message as the messages adopting HTTP, i.e., the first HTTP request message and the second HTTP request message, as an example, to explain the method for testing a network device of the disclosure.

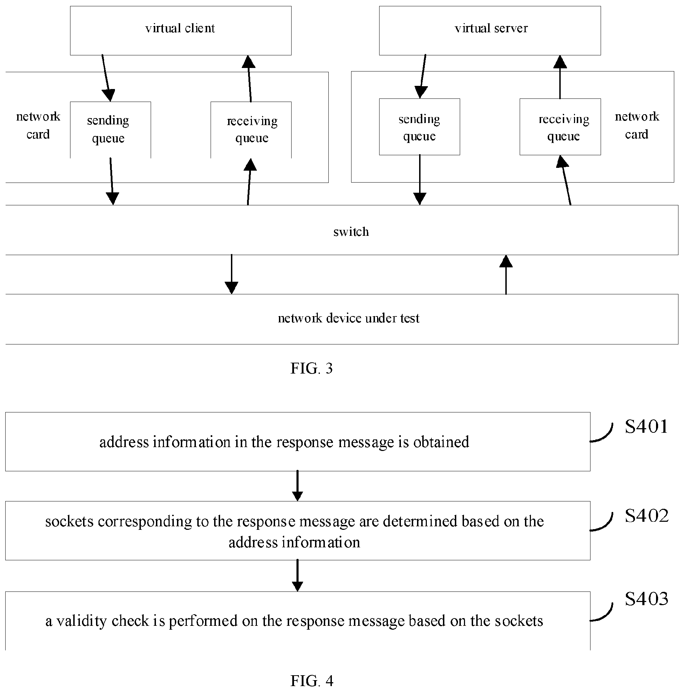

FIG. 2 is a flowchart of a method for testing a network device according to an embodiment of the disclosure. FIG. 3 is a schematic diagram of a method for testing a network device according to an embodiment of the disclosure. As illustrated in FIGS. 2 and 3, the method includes the following steps.

At block S201, at least one virtual client is simulated, and a second request message to be sent is generated by the virtual client based on an existing first request message.

For the relevant introduction of step S201, reference may be made to the relevant content of the above embodiment, which will not be repeated here.

At block S202, the generated second HTTP request message is cached in a request message sending queue corresponding to the virtual client.

In some implementations, the second HTTP request message carries the identifier of the virtual client, and there is a mapping relation between the virtual client and the request message sending queue. The request message sending queue corresponding to the virtual client can be obtained according to the identifier of the virtual client, and then the second HTTP request message is cached in the request message sending queue corresponding to the virtual client.

At block S203, the second HTTP request message is read from the request message sending queue, and sent to the network device through a network card.

In some implementations, the server has a network card, and the network performance can be improved by utilizing the flow classification FDIR features of the network card. The second HTTP request message is read from the request message sending queue and sent to the network device through the network card. The network device communicates through a switch.

At block S204, the response message is received from the network device through the network card, and the response message is sent by the virtual server to the network device.

The virtual server generates the response message for the second HTTP request message and sends it to the network device, and then the network device sends the response message to the virtual client through the network card.

At block S205, the received response message is cached in a response message receiving queue corresponding to the virtual client in the network card.

Each network card has multiple response message receiving queues, and different response message receiving queues correspond to different virtual clients, and there is no need to lock the queues in the processing process, thereby further improving the efficiency for testing network devices. In response to the server simulating two or more virtual clients, through the FDIR rule, the received response messages can be cached in the response message receiving queues corresponding to the virtual clients in the network card.

At block S206, the response message is read from the response message receiving queue, and the response message is directly released.

The response message is read from the response message receiving queue. It should be noted that, in the embodiments of the disclosure, the contents of the response message are fixed to avoid waste of resources and improve efficiency. After reading the message, the server does not need to parse the response message, that is, the response message is directly released.

In the embodiments of the disclosure, the second HTTP request message is read from the request message sending queue and sent to the network device through the network card. The response message is received from the network device through the network card, and cached in the response message receiving queue corresponding to the virtual client in the network card. The response message is read from the response message receiving queue, and is directly released. The disclosure avoids waste of resources, reduces the costs for testing network devices, and simplifies the testing process, so that the efficiency is accelerated, and the flexibility of testing the network devices is improved.

FIG. 4 is a flowchart of a method for testing a network device according to an embodiment of the disclosure. As illustrated in FIG. 4, the method further includes the following steps.

At block S401, address information in the response message is obtained.

Optionally, the address information of the virtual client is obtained according to the header of the response message.

At block S402, sockets corresponding to the response message are determined based on the address information.

An identifier of the virtual client is obtained according to the address information of the virtual client. A port serial number of the virtual server is obtained according to a port of the virtual server. The sockets corresponding to the response message are obtained based on the identifier of the virtual client, the port of the virtual client, and the port serial number of the virtual server.

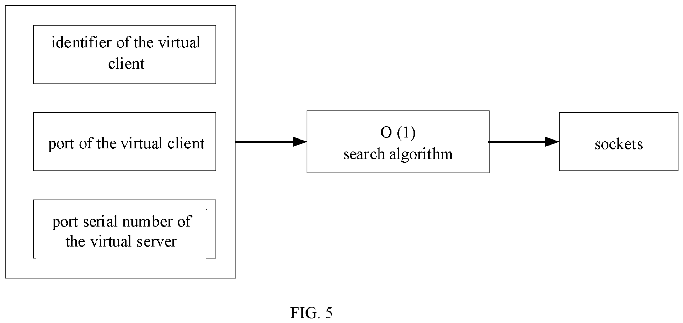

As illustrated in FIG. 5, in some implementations, the server applies for the sockets in advance, and each virtual server processes response messages of the port of the virtual server. The port range of the virtual server is fixed, at this time, the virtual server can generate a socket table according to the identifier of the virtual client, the port of the virtual client and the port serial number of the virtual server. According to the socket table, the socket search algorithm with time complexity of O (1) can be used, to obtain the sockets corresponding to the response message based on the identifier of the virtual client, the port of the virtual client, and the port serial number of the virtual server.

It should be noted that, in the embodiments of the disclosure, the sockets corresponding to the response message may also be obtained according to other search algorithms or information, which is not limited in the disclosure.

At block S403, a validity check is performed on the response message based on the sockets.

In the embodiment of the disclosure, the sockets can confirm the connection status between the virtual client and the device, and validity check is performed on the response message according to the sockets. For example, if the connection status between the virtual client and the device is the connection state, it is determined that the response message is transferred sequentially without errors and repetitions.

In the embodiment of the disclosure, the address information in the response message is obtained. The sockets corresponding to the response message are determined according to the address information, and the validity check is performed on the response message according to the sockets. The disclosure avoids waste of resources, reduces the costs for testing network devices, and simplifies the testing process, so that the efficiency is accelerated, and the flexibility and accuracy of testing the network devices is improved.

In some implementations, the TCP connection between the virtual client and the network device is established, and after receiving the response message, the TCP connection is disconnected. Optionally, the stop and wait agreement and the retransmission mechanism at a fixed interval can be used to simplify the complexity of the TCP connection and further improve the efficiency of testing the network device.

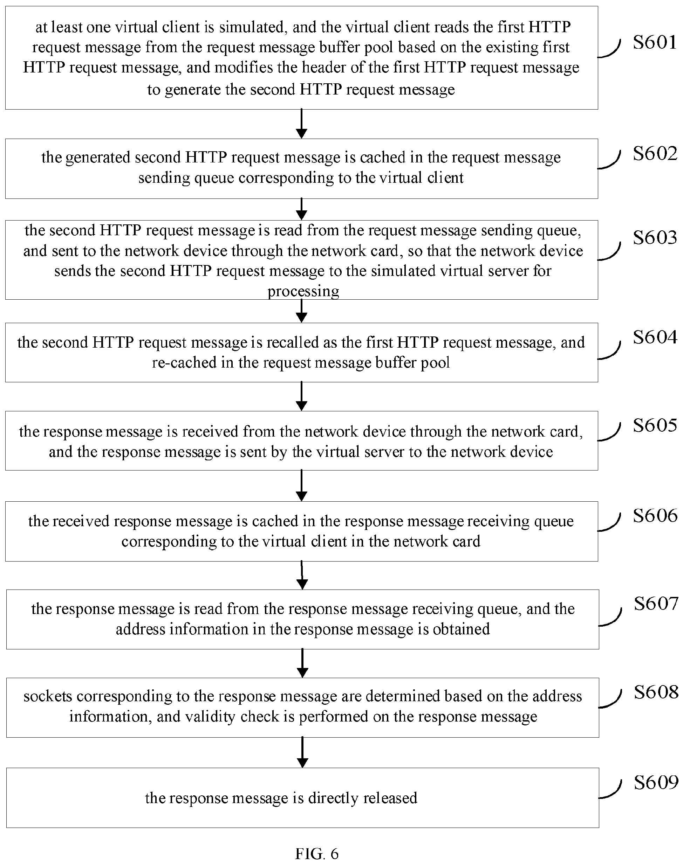

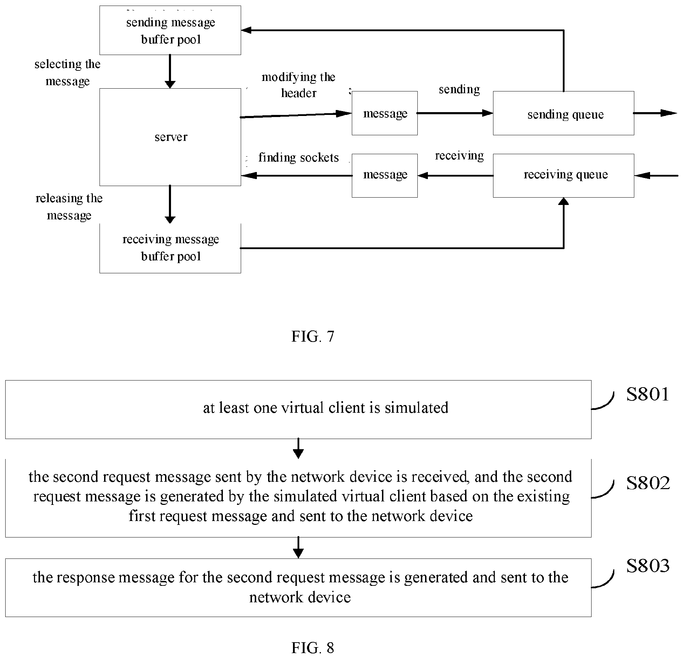

FIG. 6 is a flowchart of a method for testing a network device according to an embodiment of the disclosure. FIG. 7 is a schematic diagram of a method for testing a network device according to an embodiment of the disclosure. As illustrated in FIGS. 6 and 7, the method includes the following steps.

At block S601, at least one virtual client is simulated, and the virtual client reads the first HTTP request message from the request message buffer pool based on the existing first HTTP request message, and modifies the header of the first HTTP request message to generate the second HTTP request message.

At block S602, the generated second HTTP request message is cached in the request message sending queue corresponding to the virtual client.

At block S603, the second HTTP request message is read from the request message sending queue, and sent to the network device through the network card, so that the network device sends the second HTTP request message to the simulated virtual server for processing.

At block S604, the second HTTP request message is recalled as the first HTTP request message, and re-cached in the request message buffer pool.

At block S605, the response message is received from the network device through the network card, and the response message is sent by the virtual server to the network device.

At block S606, the received response message is cached in the response message receiving queue corresponding to the virtual client in the network card.

At block S607, the response message is read from the response message receiving queue, and the address information in the response message is obtained.

At block S608, sockets corresponding to the response message are determined based on the address information, and validity check is performed on the response message.

At block S609, the response message is directly released.

The disclosure avoids waste of resources, reduces the costs for testing network devices, and simplifies the testing process, so that the efficiency is accelerated, and the flexibility of testing the network devices is improved.

FIG. 8 is a flowchart of a method for testing a network device according to an embodiment of the disclosure. As illustrated in FIG. 8, the method includes the following steps.

At block S801, at least one virtual client is simulated.

The server simulates at least one virtual server, and there may be multiple virtual servers distinguished by the identifiers of the virtual servers.

At block S802, the second request message sent by the network device is received, and the second request message is generated by the simulated virtual client based on the existing first request message and sent to the network device.

In some implementations, the first request message is stored in the request message buffer pool. The virtual client reads the first request message from the request message buffer pool, and modifies the header of the first request message to generate the second request message to be sent. The virtual client sends the second request message to the network device, and then the network device sends the second request message to the virtual server.

At block S803, the response message for the second request message is generated and sent to the network device.

The purpose of the embodiments of the disclosure is to perform performance testing on the network device, so there is no need to limit the specific contents of the message. In some implementations, the response message to be sent can be generated according to the second request message and sent to the network device.

It should be noted that, in the disclosure, the network device mainly realizes the forwarding of the interaction messages between the virtual client and the virtual server, that is, the relevant introduction in step S802 and step S803. The performance of the network device is detected according to the forwarding of the interaction messages between the virtual client and the virtual server.

In the embodiment of the disclosure, at least one virtual server is simulated. The second request message sent by the network device is received, and the response message for the second request message is generated and sent to the network device. The disclosure avoids waste of resources, reduces the costs for testing network devices, and simplifies the testing process, so that the efficiency is accelerated, and the flexibility of testing the network devices is improved.

In some implementations, the virtual server responds to the second request message and generates the response message. In order to simplify the testing process of network devices, improve the efficiency, and improve the flexibility of testing network devices, in some implementations, the virtual server reads the existing response message from the response message buffer pool, modifies the header of the existing response message, to generate the response message for the second request message.

In some implementations, in order to simplify operations and avoid wasting resources, the response message can be recalled as the existing response message, and re-cached in the request message buffer pool for repeated use.

The following takes the first request message and the second request message as the message adopting the HTTP, i.e., the first HTTP request message and the second HTTP request message as an example, to explain the method for testing the network device of the disclosure.

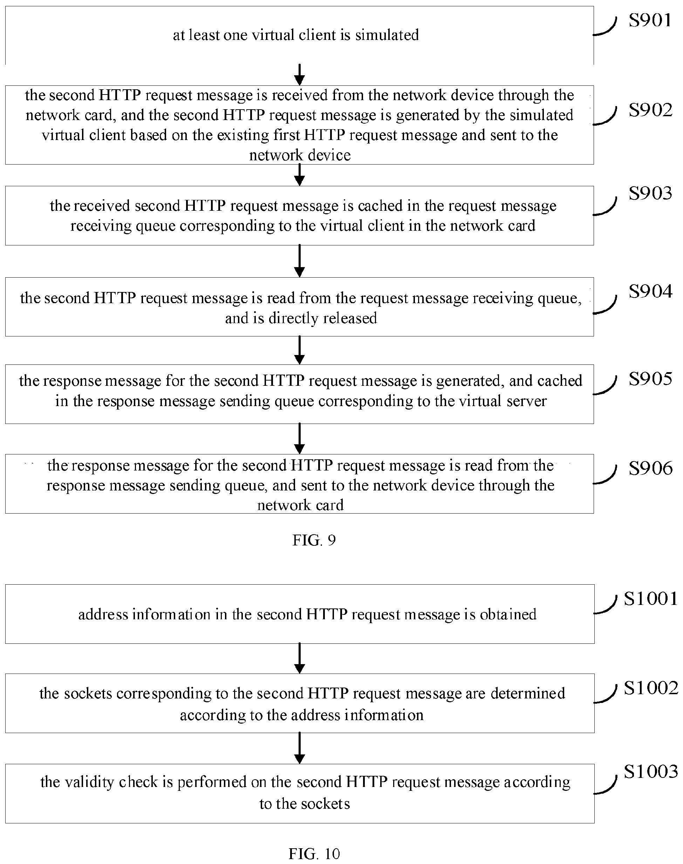

FIG. 9 is a flowchart of a method for testing a network device according to an embodiment of the disclosure. As illustrated in FIGS. 9 and 3, the method includes the following steps.

At block S901, at least one virtual client is simulated.

At block S902, the second HTTP request message is received from the network device through the network card, and the second HTTP request message is generated by the simulated virtual client based on the existing first HTTP request message and sent to the network device.

For the relevant introduction of step S901 and step S902, reference may be made to the relevant contents of the above embodiments, which will not be repeated here.

At block S903, the received second HTTP request message is cached in the request message receiving queue corresponding to the virtual client in the network card.

In some implementations, the server has a network card, and the network performance can be improved by utilizing the flow classification FDIR features of the network card. The received second HTTP request message is cached in the request message receiving queue corresponding to the virtual client through the network card.

In some implementations, the second HTTP request message carries the identifier of the virtual client, and there is a mapping relation between the virtual client and the request message sending queue. The request message sending queue corresponding to the virtual client can be obtained according to the identifier of the virtual client, and the second HTTP request message is cached in the request message sending queue corresponding to the virtual client.

At block S904, the second HTTP request message is read from the request message receiving queue, and is directly released.

The second HTTP request message is read from the request message receiving queue. It should be noted that, in the embodiment of the disclosure, the contents of the second HTTP request message are fixed, which avoids waste of resources and improves the efficiency. After reading the message, the server does not need to parse the second HTTP request message, that is, the second HTTP request message is directly released.

At block S905, the response message for the second HTTP request message is generated, and cached in the response message sending queue corresponding to the virtual server.

The virtual server reads the existing response message from the response message buffer pool, and modifies the header of the existing response message, so that the response message for the second HTTP request message is generated and cached in the response message sending queue corresponding to the virtual server.

At block S906, the response message for the second HTTP request message is read from the response message sending queue, and sent to the network device through the network card.

The server sends the response message for the second HTTP request message to the network device through the network card. The network device communicates through a switchboard.

In the embodiment of the disclosure, the received second HTTP request message is cached in the request message receiving queue corresponding to the virtual client in the network card. The second HTTP request message is read from the request message receiving queue, and is directly released. The response message for the second HTTP request message is generated and cached in the response message sending queue corresponding to the virtual server. The response message for the second HTTP request message is read from the response message sending queue, and sent to the network device through the network card. The disclosure avoids waste of resources, reduces the costs for testing network devices, and simplifies the testing process, so that the efficiency is accelerated, and the flexibility of testing the network devices is improved.

FIG. 10 is a flowchart of a method for testing a network device according to an embodiment of the disclosure. As illustrated in FIGS. 10 and 7, the method includes the following steps.

At block S1001, address information in the second HTTP request message is obtained.

Optionally, the address information of the virtual server may be acquired according to the header of the second HTTP request message.

At block S1002, the sockets corresponding to the second HTTP request message are determined according to the address information.

The identifier of the virtual server is obtained according to the address information of the virtual server. The port serial number of the virtual client is obtained according to the port of the virtual client, and then the sockets corresponding to the second HTTP request message are obtained according to the identifier of the virtual server, the port of the virtual server and the port serial number of the virtual client.

In some implementations, the server applies for the sockets in advance, and each virtual server processes response messages of the port of the virtual server. The port range of the virtual server is fixed, at this time, the virtual server can generate a socket table according to the identifier of the virtual client, the port of the virtual client and the port serial number of the virtual server. According to the socket table, the socket search algorithm with time complexity of O (1) can be used, to obtain the sockets corresponding to the second HTTP request message based on the identifier of the virtual client, the port of the virtual client, and the port serial number of the virtual server.

It should be noted that, in this embodiment of the disclosure, the sockets corresponding to the second request message may also be obtained according to other search algorithms or information, which is not limited in the disclosure.

At block S1003, the validity check is performed on the second HTTP request message according to the sockets.

In the embodiment of the disclosure, the sockets can confirm the connection status between the virtual client and the device, and validity check is performed on the second HTTP request message according to the sockets. For example, if the connection status between the virtual client and the device is the connection state, it is determined that the second HTTP request message is transferred sequentially without errors and repetitions.

In the embodiment of the disclosure, the address information in the second HTTP request message is obtained. The sockets corresponding to the second HTTP request message are determined according to the address information, and the validity check is performed on the second HTTP request message according to the sockets. The disclosure avoids waste of resources, reduces the costs for testing network devices, and simplifies the testing process, so that the efficiency is accelerated, and the flexibility and accuracy of testing the network devices is improved.

In some implementations, the TCP connection between the virtual client and the network device is established, and after receiving the response message, the TCP connection is disconnected. Optionally, the stop and wait agreement and the retransmission mechanism at a fixed interval can be used to simplify the complexity of the TCP connection and further improve the efficiency of testing the network device.

It should be noted that the disclosure may be executed by one server. Different Central Processing Units (CPUs) of the server simulate different virtual servers and virtual clients. Optionally, the disclosure may be executed by two or more physical servers, in which different servers simulate different virtual servers and virtual clients, which are not limited in the disclosure.

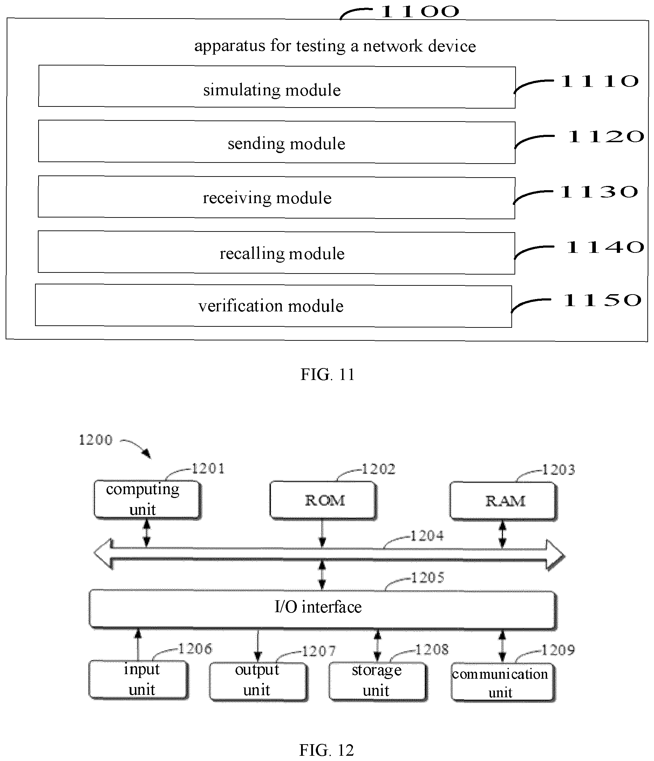

FIG. 11 is a block diagram of an apparatus for testing a network device according to an embodiment of the disclosure. As illustrated in FIG. 11, the apparatus 1100 includes: a simulating module 1110, a sending module 1120 and a receiving module 1130.

The simulating module 1110 is configured to simulate at least one virtual client, and generate a second request message to be sent by the virtual client based on an existing first request message.

The sending module 1120 is configured to send the second request message to the network device, so that the network device sends the second request message to a simulated virtual server for processing.

The receiving module 1130 is configured to receive a response message for the second request message sent by the network device, in which the response message is sent by the virtual server to the network device.

In a possible implementation, the simulating module 1110 is further configured to:
read the first request message from a request message buffer pool; and
generate the second request message by modifying a header of the first request message.

In a possible implementation, the apparatus further includes: a recalling module 1140, configured to recall the second request message as the first request message, and re-cache in the request message buffer pool.

In a possible implementation, the sending module 1120 is further configured to:
cache the second request message in a request message sending queue corresponding to the virtual client; and
read the second request message from the request message sending queue, and send the second request message to the network device through a network card.

In a possible implementation, the receiving module 1130 is further configured to:
receive the response message from the network device through a network card;
cache the response message in a response message receiving queue corresponding to the virtual client in the network card; and
read the response message from the response message receiving queue, and release the response message directly.

In a possible implementation, the apparatus further includes a verification module 1150, configured to:
obtain address information in the response message;
determine sockets corresponding to the response message based on the address information; and
perform a validity check on the response message based on the sockets.

In a possible implementation, the verification module 1150 is further configured to:
obtain an identifier of the virtual client based on the address information of the virtual client;
obtain a port serial number of the virtual server based on a port of the virtual server; and
obtain the sockets corresponding to the response message based on the identifier of the virtual client, a port of the virtual client, and the port serial number of the virtual server.

In a possible implementation, the simulating module 1110 is further configured to:
establish a TCP connection between the virtual client and the network device, and disconnect the TCP connection after receiving the response message.

In the embodiments of the disclosure, the at least one virtual client is simulated, and the virtual client generates the second request message to be sent based on the existing first request message, and sends the second request message to the network device. The response message for the second request message sent by the network device is received. The disclosure avoids waste of resources, reduces the costs for testing network devices, and simplifies the testing process, so that the efficiency is accelerated, and the flexibility of testing the network devices is improved.

The disclosure also provides another apparatus for testing a network device. As illustrated in FIG. 11, the apparatus 1100 includes: a simulating module 1110, a sending module 1120 and a receiving module 1130.

The simulating module 1110 is configured to simulate at least one virtual server.

The receiving module 1130 is configured to receive a second request message sent by the network device, in which the second request message is generated by a simulated virtual client based on an existing first request message and sent to the network device.

The sending module 1120 is configured to generate a response message for the second request message, and send the response message to the network device.

In a possible implementation, the sending module 1120 is further configured to:
read an existing response message from a response message buffer pool; and
generate the response message for the second request message by modifying a header of the existing response message.

In a possible implementation, the apparatus further includes: a recalling module 1140, configured to recall the response message as the existing response message, and re-cache in a request message buffer pool.

In a possible implementation, the sending module 1120 is further configured to:
cache the generated response message in a response message sending queue corresponding to the virtual server; and
read the response message for the second request message from the response message sending queue, and send the response message to the network device through a network card.

In a possible implementation, the receiving module 1130 is further configured to:
receive the second request message from the network device through a network card;
cache the received second request message in a request message receiving queue corresponding to the virtual client in the network card; and
read the second request message from the request message receiving queue, and release the second request message directly.

In a possible implementation, the apparatus further includes: a verification module 1150, configured to:
obtain an address information in the second request message;
determine sockets corresponding to the second request message based on the address information; and
perform validity check on the second request message based on the sockets.

In a possible implementation, the verification module 1150 is further configured to:
obtain an identifier of the virtual server based on the address information of the virtual server;
obtain a port serial number of the virtual client based on a port of the virtual client; and
obtain the sockets corresponding to the second request message based on the identifier of the virtual server, a port of the virtual server and the port serial number of the virtual client.

In a possible implementation, the simulating module 1110 is further configured to:
establish a TCP connection between the virtual server and the network device, and disconnect the TCP connection after sending the response message.

In the embodiments of the disclosure, the at least one virtual client is simulated, and the second request message sent by the network device is received, the response message for the second request message is generated and sent to the network device. The disclosure avoids waste of resources, reduces the costs for testing network devices, and simplifies the testing process, so that the efficiency is accelerated, and the flexibility of testing the network devices is improved.

According to the embodiments of the disclosure, the disclosure provides an electronic device, a readable storage medium and a computer program product.

FIG. 12 is a block diagram of an example electronic device 1200 used to implement the embodiments of the disclosure. Electronic devices are intended to represent various forms of digital computers, such as laptop computers, desktop computers, workbenches, personal digital assistants, servers, blade servers, mainframe computers, and other suitable computers. Electronic devices may also represent various forms of mobile devices, such as personal digital processing, cellular phones, smart phones, wearable devices, and other similar computing devices. The components shown here, their connections and relations, and their functions are merely examples, and are not intended to limit the implementation of the disclosure described and/or required herein.

As illustrated in FIG. 12, the electronic device 1200 includes: a computing unit 1201 performing various appropriate actions and processes based on computer programs stored in a read-only memory (ROM) 1202 or computer programs loaded from the storage unit 1208 to a random access memory (RAM) 1203. In the RAM 1203, various programs and data required for the operation of the device 1200 are stored. The computing unit 1201, the ROM 1202, and the RAM 1203 are connected to each other through a bus 1204. An input/output (I/O) interface 1205 is also connected to the bus 1204.

Components in the device 1200 are connected to the I/O interface 1205, including: an inputting unit 1206, such as a keyboard, a mouse; an outputting unit 1207, such as various types of displays, speakers; a storage unit 1208, such as a disk, an optical disk; and a communication unit 1209, such as network cards, modems, and wireless communication transceivers. The communication unit 1209 allows the device 1200 to exchange information/data with other devices through a computer network such as the Internet and/or various telecommunication networks.

The computing unit 1201 may be various general-purpose and/or dedicated processing components with processing and computing capabilities. Some examples of computing unit 1201 include, but are not limited to, a CPU, a graphics processing unit (GPU), various dedicated AI computing chips, various computing units that run machine learning model algorithms, and a digital signal processor (DSP), and any appropriate processor, controller and microcontroller. The computing unit 1201 executes the various methods and processes described above, such as the method for testing a network device. For example, in some embodiments, the method may be implemented as a computer software program, which is tangibly contained in a machine-readable medium, such as the storage unit 1208. In some embodiments, part or all of the computer program may be loaded and/or installed on the device 1200 via the ROM 1202 and/or the communication unit 1209. When the computer program is loaded on the RAM 1203 and executed by the computing unit 1201, one or more steps of the method described above may be executed. Alternatively, in other embodiments, the computing unit 1201 may be configured to perform the method in any other suitable manner (for example, by means of firmware).

Various implementations of the systems and techniques described above may be implemented by a digital electronic circuit system, an integrated circuit system, Field Programmable Gate Arrays (FPGAs), Application Specific Integrated Circuits (ASICs), Application Specific Standard Products (ASSPs), System on Chip (SOCs), Load programmable logic devices (CPLDs), computer hardware, firmware, software, and/or a combination thereof. These various embodiments may be implemented in one or more computer programs, the one or more computer programs may be executed and/or interpreted on a programmable system including at least one programmable processor, which may be a dedicated or general programmable processor for receiving data and instructions from the storage system, at least one input device and at least one output device, and transmitting the data and instructions to the storage system, the at least one input device and the at least one output device.

The program code configured to implement the method of the disclosure may be written in any combination of one or more programming languages. These program codes may be provided to the processors or controllers of general-purpose computers, dedicated computers, or other programmable data processing devices, so that the program codes, when executed by the processors or controllers, enable the functions/operations specified in the flowchart and/or block diagram to be implemented. The program code may be executed entirely on the machine, partly executed on the machine, partly executed on the machine and partly executed on the remote machine as an independent software package, or entirely executed on the remote machine or server.

In the context of the disclosure, a machine-readable medium may be a tangible medium that may contain or store a program for use by or in combination with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, random access memories (RAM), read-only memories (ROM), electrically programmable read-only-memory (EPROM), flash memory, fiber optics, compact disc read-only memories (CD-ROM), optical storage devices, magnetic storage devices, or any suitable combination of the foregoing.

In order to provide interaction with a user, the systems and techniques described herein may be implemented on a computer having a display device (e.g., a Cathode Ray Tube (CRT) or a Liquid Crystal Display (LCD) monitor for displaying information to a user); and a keyboard and pointing device (such as a mouse or trackball) through which the user can provide input to the computer. Other kinds of devices may also be used to provide interaction with the user. For example, the feedback provided to the user may be any form of sensory feedback (e.g., visual feedback, auditory feedback, or haptic feedback), and the input from the user may be received in any form (including acoustic input, voice input, or tactile input).

The systems and technologies described herein can be implemented in a computing system that includes background components (for example, a data server), or a computing system that includes middleware components (for example, an application server), or a computing system that includes front-end components (for example, a user computer with a graphical user interface or a web browser, through which the user can interact with the implementation of the systems and technologies described herein), or include such background components, intermediate computing components, or any combination of front-end components. The components of the system may be interconnected by any form or medium of digital data communication (e.g., a communication network). Examples of communication networks include: local area network (LAN), wide area network (WAN), and the Internet.

The computer system may include a client and a server. The client and server are generally remote from each other and interacting through a communication network. The client-server relation is generated by computer programs running on the respective computers and having a client-server relation with each other. The server may be a cloud server, a server of a distributed system, or a server combined with a block-chain.

It should be understood that the various forms of processes shown above can be used to reorder, add or delete steps. For example, the steps described in the disclosure could be performed in parallel, sequentially, or in a different order, as long as the desired result of the technical solution disclosed in the disclosure is achieved, which is not limited herein.

The above specific embodiments do not constitute a limitation on the protection scope of the disclosure. Those skilled in the art should understand that various modifications, combinations, sub-combinations and substitutions can be made according to design requirements and other factors.

## Claims

1. A method for testing a network device, comprising:
simulating at least one virtual client, and generating by the virtual client a second request message to be sent based on an existing first request message (S101);
sending the second request message to the network device, so that the network device sends the second request message to a simulated virtual server for processing (S 102); and
receiving a response message for the second request message sent by the network device, wherein the response message is sent by the virtual server to the network device (S103).

2. The method of claim 1, wherein generating the second request message to be sent, comprises:
reading the first request message from a request message buffer pool; and
generating the second request message by modifying a header of the first request message.

3. The method of claim 2, after sending the second request message to the network device, further comprising:
recalling the second request message as the first request message, and re-caching the first request message in the request message buffer pool.

4. The method of any one of claims 1-3, further comprising:
caching the second request message in a request message sending queue corresponding to the virtual client; and
reading the second request message from the request message sending queue, and sending the second request message to the network device through a network card.

5. The method of any one of claims 1-3, wherein receiving the response message for the second request message sent by the network device, comprises:
receiving the response message from the network device through a network card;
caching the response message in a response message receiving queue corresponding to the virtual client in the network card; and
reading the response message from the response message receiving queue, and releasing the response message directly.

6. The method of claim 5, after reading the response message from the response message receiving queue, further comprising:
obtaining address information in the response message;
determining sockets corresponding to the response message based on the address information; and
performing a validity check on the response message based on the sockets.

7. The method of claim 6, wherein determining the sockets corresponding to the response message based on the address information comprises:
obtaining an identifier of the virtual client based on the address information of the virtual client;
obtaining a port serial number of the virtual server based on a port of the virtual server; and
obtaining the sockets corresponding to the response message based on the identifier of the virtual client, the port of the virtual client, and the port serial number of the virtual server.

8. The method of claim 6, after simulating the at least one virtual client, further comprising:
establishing a Transmission Control Protocol (TCP) connection between the virtual client and the network device, and disconnecting the TCP connection after receiving the response message.

9. A method for testing a network device, comprising:
simulating at least one virtual server (S401);
receiving a second request message sent by the network device, wherein the second request message is generated by a simulated virtual client based on an existing first request message and sent to the network device (S402); and
generating a response message for the second request message, and sending the response message to the network device (S403).

10. The method of claim 9, wherein generating the response message for the second request message comprises:
reading an existing response message from a response message buffer pool; and
generating the response message for the second request message by modifying a header of the existing response message.

11. The method of claim 10, after sending the response message for the second request message to the network device, further comprising:
recalling the response message as the existing response message, and re-caching the existing response message in the request message buffer pool.

12. The method of any one of claims 9-11, further comprising:
caching the generated response message in a response message sending queue corresponding to the virtual server; and
reading the response message for the second request message from the response message sending queue, and sending the response message to the network device through a network card.

13. The method of any one of claims 9-11, wherein receiving the second request message sent by the network device comprises:
receiving the second request message from the network device through a network card;
caching the received second request message in a request message receiving queue corresponding to the virtual client in the network card; and
reading the second request message from the request message receiving queue, and releasing the second request message directly.

14. The method of claim 13, after reading the second request message from the request message receiving queue, further comprising:
obtaining address information in the second request message;
determining sockets corresponding to the second request message based on the address information; and
performing validity check on the second request message based on the sockets.

15. An electronic device, comprising:
at least one processor; and
a memory communicatively coupled to the at least one processor; wherein,
the memory stores instructions executable by the at least one processor, when the instructions are executed by the at least one processor, the at least one processor is enabled to implement the method of any one of claims 1-8 or 9-14.
